# EUROPÄISCHE PATENTSCHRIFT

(11) **EP 3 720 753 B1**
(45) Veröffentlichungstag und Bekanntmachung des Hinweises auf die Patenterteilung: **01.12.2021**
(21) Anmeldenummer: 18739770.8
(22) Anmeldetag: 28.06.2018
(51) Int. Cl.: B61C 3/00, B61C 17/00, B61F 1/00

(54) **VORRICHTUNG UND VERFAHREN ZUM UMBAU EINER DIESELELEKTRISCHEN LOKOMOTIVE ZU EINER ELEKTRISCHEN LOKOMOTIVE**
DEVICE AND METHOD FOR CONVERTING A DIESEL-ELECTRIC LOCOMOTIVE INTO AN ELECTRIC LOCOMOTIVE
DISPOSITIF ET PROCÉDÉ DE CONVERSION D'UNE LOCOMOTIVE DIESEL-ÉLECTRIQUE EN UNE LOCOMOTIVE ÉLECTRIQUE

(30) Priorität: 13.03.2018 DE 102018203730
(43) Veröffentlichungstag der Anmeldung: 14.10.2020
(73) Patentinhaber: Siemens Mobility GmbH, 81739 München (DE)
(72) Erfinder: HINTERMEIR, Stefan, 83229 Aschau I. Ch (DE); HÄRER, Andreas, 91080 Uttenreuth (DE)
(86) Internationale Anmeldenummer: PCT/EP2018/067501
(87) Internationale Veröffentlichungsnummer: WO 2019/174759

(56) Entgegenhaltungen:
- EP-A1- 0 730 539
- EP-A1- 1 958 843
- WO-A1-97/46351
- DE-B- 1 063 628

## Beschreibung

Die Erfindung betrifft eine Vorrichtung und ein Verfahren zum Umbau einer dieselelektrischen Lokomotive zu einer elektrischen Lokomotive, sowie eine solcherart umgebaute elektrische Lokomotive.

Durch die steigenden Dieselpreise gibt es insbesondere in Ländern mit sehr großer Anzahl von dieselelektrischen Lokomotiven ("DE-Loks") den Bedarf nach einer Elektrifizierung der Strecken. Da die vorhandenen dieselelektrischen Lokomotiven in der Regel aber noch verwendbar sind, ist ein Umbau dieser DE-Loks in elektrische Lokomotiven ("E-Loks") von Vorteil.

Bisher wurden in wenigen Fällen schon dieselelektrische Lokomotiven in elektrische Lokomotiven umgebaut. Für einen solchen Umbau kann im Allgemeinen die mechanische Grundkonstruktion, wie Wagenkasten oder Untergestell, das Drehgestell mit den Antrieben (Fahrmotor und Getriebe), der Führerraum mit Bedienelementen und Komforteinrichtungen und die Bremsausrüstung weiterverwendet werden.

Ausgebaut werden hingegen der Dieselmotor mit angeflanschtem Generator, die zugehörige Kühlanlage, Luftaufbereitung und Abgasschalldämpfer sowie Bremswiderstände und andere Hilfsbetriebe, sowie die vorhandenen Antriebsstromrichter.

Für den Einsatz als E-Loks müssen dann neu Hochspannungskomponenten, der Transformator, Stromrichter mit netzseitigem und fahrmotorseitigem Anteil, eine zugehörige Kühlanlage und Hilfsbetriebeumrichter in die weiterverwendeten Komponenten installiert werden. In der Regel werden die installierten Komponenten einzeln auf dem Untergestell der ausgeräumten Lok angeordnet, montiert und die notwendigen Verbindungen untereinander und zu Komponenten der Lok über Kabel und Rohre verbunden.

Diese Umrüstung ist sehr aufwändig und kostenintensiv. Zudem ist eine Überprüfung des Zusammenspiels der Komponenten vor dem fertigen Umbau nicht einfach möglich. Dies stellt einen wirtschaftlichen Nachteil dar.

Aus Dokument EP 1 958 843 A1 ist ein Verfahren zur Herstellung einer Lokomotive mit wahlweise einer Motor-Generator- oder einer Stromwandler-Hochspannungsgerüst-Kombination bekannt, um Herstellungskosten zu reduzieren.

Aus Dokument DE 1 063 628 A ist ein austauschbares Antriebsaggregat für einen Schienentriebzug bekannt, bei dem von zwei baugleichen, vorhandenen Antrieben einer ersetzt wird.

Aus Dokument WO 97/46351 A1 ist ein Verfahren zum Aufbau einer Lokomotive bekannt.

Es ist daher eine Aufgabe der vorliegenden Erfindung, eine Vorrichtung und Verfahren zum Umbau einer dieselelektrischen Lokomotive, sowie eine derart umgerüstete elektrische Lokomotive zur Verfügung zu stellen, welche die Nachteile des Standes der Technik überwindet und eine verbesserte Umrüstung erlaubt.

Diese Aufgabe wird zum einen durch eine Vorrichtung gemäß Patentanspruch 1, ein Verfahren gemäß Patentanspruch 9 sowie durch eine elektrische Lokomotive gemäß Patentanspruch 8 gelöst.

Eine erfindungsgemäße Vorrichtung ("Electro Power Pack") zum Umbau einer dieselelektrischen Lokomotive zu einer elektrischen Lokomotive umfasst die folgenden Komponenten:
- Betriebskomponenten für eine elektrische Lokomotive Dies sind diejenigen Komponenten, die für den Antrieb eines Elektromotors gemäß dem Prinzip einer elektrischen Lokomotive verantwortlich sind und normalerweise im Maschinenraum einer elektrischen Lokomotive untergebracht sind. Die Betriebskomponenten können auch als "wesentliche Komponenten" einer elektrischen Lokomotive bezeichnet werden und sie umfassen im Wesentlichen die elektrischen Schalt-, Steuer- und Übertragungsanlagen einer E-Lok.

Da in dieselelektrischen Lokomotiven normalerweise bereits ein oder mehrere Fahrmotoren (Elektromotoren) enthalten sind, werden diese bevorzugt nicht von der Vorrichtung umfasst. Die Fahrmotoren sind zumindest nicht Teil der Betriebskomponenten.

### - Einen Adapterrahmen

Dieser Adapterrahmen ist ein stabiler Rahmen, z.B. aus Stahl, auf dem die Betriebskomponenten aufgebracht sind. Er gewährleistet einen stabilen Stand auf einer Unterlage und eine stabile Befestigung der Betriebskomponenten, so dass die Vorrichtung vorzugsweise außerhalb einer Lokomotive zusammengesetzt und einfach durch Anheben des Adapterrahmens in die umzubauende Lokomotive gehoben werden kann. Dazu sollte der Adapterrahmen eine entsprechende Steifigkeit aufweisen. Zudem sollte der Adapterrahmen so ausgeformt sein, dass die Vorrichtung bei der Montage der Betriebskomponenten auf dem Adapterrahmen nicht kippt. Dazu ist es von Vorteil, wenn er (zumindest im Bereich unter den jeweiligen Betriebskomponenten) breiter ist als die jeweiligen Betriebskomponenten.

Der Adapterrahmen ist im Sinne der Erfindung so gestaltet, dass er mit Anbindungspunkten, also z.B. Generatoranbindungspunkten und/oder Dieselmotoranbindungspunkten einer mechanischen Grundkonstruktion der dieselelektrischen Lokomotive, also z.B. einem Untergestell, verbindbar ist.

Der Adapterrahmen hat bevorzugt eine rechteckige Grundform. Je nach den geometrischen Vorgaben durch den Unterbau der umzubauenden Lokomotive kann es jedoch erforderlich oder vorteilhaft sein, dass der Adapterrahmen von der rechteckigen Grundform abweicht. Wenn z.B. eine Rippe im Unterbau vorhanden ist, um diesen zu stabilisieren, sollte nicht diese Rippe entfernt werden, sondern der Adapterrahmen an den entsprechenden Stellen entsprechend ausgeformt sein, z.B. durch Ausnehmungen oder Taillierungen. Auch kann der Adapterrahmen Ausstülpungen an bestimmten Stellen der Seiten aufweisen, um z.B. eine bessere Anbindung an einen Anbindungspunkt eines Unterbaus oder an eine Betriebskomponente herstellen zu können.

Der Adapterrahmen kann Haltestrukturen aufweisen und/oder in einigen Bereichen höher ausgeformt sein als in anderen Bereichen. Dies ist z.B. vorteilhaft, wenn in der Grundkonstruktion der dieselelektrischen Lokomotive Anbindungspunkte höher liegen als an anderen Stellen und in diesem Bereich eine Betriebskomponente angeordnet werden soll, die breiter ist als der Abstand dieser höherliegenden Anbindungspunkte. Diese Betriebskomponente kann dann so weit erhöht auf dem Adapterrahmen angebracht werden, dass sie über den höheren Anbindungspunkten liegt. Bevorzugt umfasst der Adapterrahmen einen rechteckigen Grundkörper und Haltestrukturen, die vorteilhafterweise als Befestigungsstrukturen und/oder Unterfütterungsstrukturen ausgebildet sind.

Es gibt unterschiedliche Typen von dieselelektrischen Lokomotiven, die mittels der Erfindung umgerüstet werden können. Zwei beispielhafte Typen sind der Typ EMD GT46MAC (in Indien auch bekannt als WDG 4) oder GT42CUAC Class 4000 (auch als Class PN bekannt) von Clyde/GM. Der Adapterrahmen ist bevorzugt so gestaltet, dass er auf der Grundkonstruktion einer oder gar beider Typen anbringbar ist.

Die Länge des Adapterrahmens sollte kürzer sein als die Grundkonstruktion der umzurüstenden dieselelektrischen Lok, insbesondere mindestens 2 m kürzer. Bevorzugt ist der Adapterrahmen kürzer als 18 m, insbesondere kürzer als 13 m, besonders bevorzugt kürzer als 7 m. Eine kurze Bauform hat den Vorteil, dass eine geringere Biegesteifigkeit vonnöten ist. Jedoch sollten alle gewünschten oder notwendigen Betriebskomponenten auf ihm Platz haben. Daher hat der Adapterrahmen eine Länge von mindestens 2 m, bevorzugt von mindestens 4 m, besonders bevorzugt von mindestens 6 m.

Die Breite des Adapterrahmens hängt oftmals von der Lage der Anbindungspunkte und der Form der Grundkonstruktion der umzurüstenden dieselelektrischen Lokomotive ab. Bevorzugt ist die Breite eines wesentlichen Teils des Adapterrahmens (insbesondere des Grundkörpers) mindestens 40 cm, bevorzugt mindestens 60 cm, besonders bevorzugt mindestens 80 cm.

Bevorzugt ist die Breite des wesentlichen Teils des Adapterrahmens (insbesondere des Grundkörpers) maximal 120 cm, bevorzugt maximal 100 cm, besonders bevorzugt maximal 90 cm. Bevorzugt ist die maximale Breite des Adapterrahmens (insbesondere dessen Haltestrukturen) maximal 200 cm, bevorzugt maximal 160 cm, besonders bevorzugt maximal 140 cm.

Eine erfindungsgemäße elektrische Lokomotive umfasst eine erfindungsgemäße Vorrichtung.

Ein erfindungsgemäßes Verfahren zum Umbau einer dieselelektrischen Lokomotive zu einer elektrischen Lokomotive umfasst die folgenden Schritte:
- Bereitstellung einer erfindungsgemäßen Vorrichtung außerhalb der dieselelektrischen Lokomotive. Dies erlaubt eine einfache Montage der Betriebskomponenten auf dem Adapterrahmen. Zudem ist es auf einfache Weise möglich, die Betriebskomponenten auf dem Adapterrahmen zu testen.
- Testen der Vorrichtung, insbesondere ein mechanischer und/oder elektrischer Test sowie ein Test einer Kühlanlage bzw. eines Kühlkreislaufs oder eines Bremsdruckerzeuges.
- Aufbringen der Vorrichtung auf eine mechanische Grundkonstruktion der dieselelektrischen Lokomotive. Beispielsweise kann die Vorrichtung mittels eines Krans auf einen Unterbau einer Lokomotive gehoben werden.
- Verbinden der Vorrichtung mit Anbindungspunkten der mechanischen Grundkonstruktion. Die Vorrichtung wird also an der Grundkonstruktion mittels dieser Verbindung befestigt, so dass auch gesagt werden könnte, dass eine Befestigung der Vorrichtung an den Anbindungspunkten der mechanischen Grundkonstruktion erfolgt. Dabei sind viele Verbindungsarten möglich. Bevorzugt ist eine Verschraubung, da diese eine nachträgliche Korrektur erlaubt und mechanische Spannungen aufgelöst werden können.
- Energietechnische Verbindung der Vorrichtung mit Antriebskomponenten der dieselelektrischen Lokomotive. In diesem Schritt werden beispielsweise die Betriebskomponenten mit Fahrmotoren (Elektromotoren) der Lokomotive elektrisch verbunden, so dass diese von den entsprechenden Betriebskomponenten mit Strom versorgt werden können. Auch kann hier z.B. eine steuertechnische Verbindung mit Steuerkomponenten der Lokomotive vorgenommen werden oder eine hydraulische bzw. pneumatische Verbindung eines Bremsdruckerzeugers mit einer Bremse vorgenommen werden.

In der Erfindung geht es also insbesondere darum, die wesentlichen Komponenten Transformator, Stromrichter, Kühlanlage und Hilfsbetriebeumrichter (und ggf. Bremsdruckerzeuger) in einer Vorrichtung ("Electro Power Pack") zu integrieren, dass sie außerhalb der umzubauenden dieselelektrischen Lok auf einem Adapterrahmen montiert, mit Kabel und Rohren bzw. Schläuchen verbunden, in Betrieb gesetzt und getestet werden können. Nach dem Test kann dann die komplette Vorrichtung ("Electro Power Pack") als Einheit auf die Lokomotive gesetzt und mit wenigen Schnittstellen der Lokomotive (z.B. Steuerschnittstellen, Fahrmotor, Bremse) verbunden werden.

Weitere, besonders vorteilhafte Ausgestaltungen und Weiterbildungen der Erfindung ergeben sich aus den abhängigen Ansprüchen sowie der nachfolgenden Beschreibung.

Bevorzugt sind die auf dem Adapterrahmen angeordneten Betriebskomponenten so ausgestaltet, dass sie Fahrmotoren der dieselelektrischen Lokomotive antreiben können, wenn sie mit einer Energiequelle ausgestattet oder verbunden werden. Dies hat den Vorteil, dass im Grunde keine weiteren funktionalen Komponenten zur Umrüstung benötigt werden.

Die Betriebskomponenten, also die elektrolokomotivenspezifischen Baugruppen, umfassen dabei bevorzugt elektrischen Schalt- und/oder Steuer- und/oder Übertragungsanlagen, besonders bevorzugt Komponenten der Gruppe Transformator, Stromrichter, Kühlanlage und Hilfsbetriebeumrichter, Bremsdruckerzeuger, Stromabnehmer und Ladungsspeicher.

Erfindungsgemäß sind auf dem Adapterrahmen ein Transformator, ein Stromrichter, ein Hilfsbetriebeumrichter, eine Kühlanlage und optional ein Bremsdruckerzeuger montiert. Selbstverständlich können aber auch andere Konfigurationen der Elektrolokomotiven-spezifischen Baugruppen, z.B. andere Gruppierungen oder andere Positionierungen vorgenommen werden. Bei einer dieselelektrischen Lok sind in der Regel nicht nur Fahrmotoren bereits vorhanden, sondern auch die Bremsen. Jedoch könnte es notwendig sein, auch die Drucklufterzeugung auszuwechseln. In diesem Falle umfassen die auf dem Adapterrahmen angeordneten Betriebskomponenten auch einen Bremsdruckerzeuger. Dieser kann z.B. ein Drucklufterzeuger oder aber ein Flüssigkeitsdruckerzeuger sein.

Die Reihenfolge der Betriebskomponenten in der Vorrichtung ist vorzugsweise durch den Energiefluss vorgegeben. Ein Stromabnehmer ist bevorzugt benachbart zu einem Hauptschalter angebracht, dieser bevorzugt benachbart zu einem Transformator und dieser wiederum bevorzugt benachbart zu einem Stromrichter.

Die Kühlanlage umfasst bevorzugt einen Ölkühler für den Transformator und einen Wasserkühler (oder ggf. einen Luftkühler) für einen Stromrichter. Bevorzugt ist dabei ein Kombikühler. Bei einem Kombikühler strömt z.B. Luft von außen durch eine Wasserkühlscheibe und wird dann durch eine Ölkühlscheibe durchgepresst. Es wird also nur ein Luftstrom benötigt, um Transformator und Umrichter gleichzeitig zu kühlen.

Erfindungsgemäß sind die Betriebskomponenten auf dem Adapterrahmen miteinander funktional verbunden. Der Begriff "funktional" meint dabei, dass die Verbindung eine Funktion zum Ziel hat, z.B. eine energietechnische, kühltechnische, steuertechnische oder datentechnische Funktion. Vorrichtung umfasst dazu elektrische (z.B. zwischen energietechnischen Komponenten wie Trafo, Stromrichter oder Hilfsbetriebeumrichter, aber auch zur Signalweitergabe), hydraulische (zwischen Kühlanlage und Kühlbereichen der übrigen Komponenten) bzw. pneumatische Verbindungen (im Rahmen einer Bremsausrüstung). Das bevorzugte "Electro Power Pack" hat also bevorzugt alle elektrischen, hydraulischen und pneumatischen Verbindungen zwischen den Betriebskomponenten (z.B. Transformator, Stromrichter, Kühlanlage und Hilfsbetriebeumrichter, Bremsdruckerzeuger) integriert.

Bevorzugt werden alle Schnittstellen von der Vorrichtung zur restlichen Lokomotive (also z.B. Datenschnittstellen für den Führerstand, elektrische Verbindungen zu Fahrmotoren, ggf. Kontakte zu Stromabnehmern, Bremsleitungen) an geeigneten Positionen auf der Vorrichtung positioniert. Das "Electro Power Pack" ist somit eine vorprüfbare Einheit, die elektrisch, hydraulisch und pneumatisch vorgeprüft und protokolliert werden kann. Die Vorrichtung weist bevorzugt Halterungen für Schnittstellen oder Sammelpunkte für Schnittstellen zur umzubauenden Lokomotive auf, an denen z.B. Kabel, Rohre, Schläuche, Buchsen oder Stecker befestigt werden können.

Bei dieselelektrischen Lokomotiven ist zumeist bereits ein Führerstand vorhanden. Es kann jedoch je nach Anwendungsfall notwendig oder vorteilhaft sein, den Führerstand zu ersetzen und/oder einen weiteren Führerstand hinzuzufügen, z.B. an die entgegengesetzte Seite der Lokomotive. In diesem Fall ist bevorzugt, dass zusätzlich zu den Betriebskomponenten mindestens ein Führerstand auf dem Adapterrahmen angeordnet ist, vorzugsweise an einem (längsseitigen) Ende des Adapterrahmens. Der auf dem Adapterrahmen angeordnete Führerstand wird/ist bevorzugt mit den auf dem Adapterrahmen angeordneten Betriebskomponenten elektrisch und datentechnisch verbunden.

Bevorzugt umfasst die Vorrichtung Rahmenanbindungen am Adapterrahmen. Dies sind Elemente zur Verbindung des Adapterrahmens mit Anbindungspunkten der mechanischen Grundkonstruktion einer dieselelektrischen Lokomotive. Die Anbindungspunkte sind in der Regel Generatoranbindungspunkte und Dieselmotoranbindungspunkte, also diejenigen Stellen, an denen in der dieselelektrischen Lokomotive vor dem Umbau der Generator und der Dieselmotor befestigt waren. Der Adapterrahmen kann also beispielsweise an den Generatoranbindungspunkten und Dieselmotoranbindungspunkten mit den Rahmenanbindungen angebunden bzw. befestigt werden. Andere Befestigungsmöglichkeiten, z.B. schweißen oder direktes Anschrauben (an anderen Stellen), können je nach Anwendungsfall gewählt werden.

Anbindungspunkte können bei einer dieselelektrischen Lok sowohl auf gleicher Höhe als auch auf unterschiedlichen Höhen vorliegen. Ein denkbarer Höhenunterschied könnte im Bereich von 200 mm liegen. Der Adapterrahmen kann daher auch stufig ausgestaltet sein bevorzugt an den Stellen, mit denen er an den Anbindungspunkten befestigt werden soll. Alternativ oder ergänzend umfassen die Rahmenanbindungen bevorzugt Flanschplatten zur Kompensation dieser Höhenunterschiede. Die Flanschplatten weisen dazu bevorzugt Löcher zum Ausgleich auf, die um mindestens das 1,5-fache größer sind als die zur Befestigung verwendeten Elemente (z.B. Schrauben). Bei einer Befestigung wird über den Löchern bevorzugt eine Platte anstatt einer Unterlegscheibe angeordnet, damit die Befestigungselemente (z.B. Schrauben) nicht durchrutschen.

Bevorzugt umfasst die Vorrichtung zusätzlich elastische Aufnahmen, z.B. Federelemente, insbesondere aus Stahl oder Gummi, in dem Bereich, in dem der Adapterrahmen mit Anbindungspunkten verbunden wird.

Bevorzugt ist der Adapterrahmen so gestaltet, dass er auf die mechanische Grundkonstruktion mehrerer Typen von dieselelektrischen Lokomotiven aufbringbar ist. Der Adapterrahmen ist dabei vorzugsweise so gestaltet, dass er mit Anbindungspunkten dieser Typen von dieselelektrischen Lokomotiven verbindbar ist. Sollten die unterschiedlichen Typen jeweils Anbindungspunkte an verschiedenen Positionen aufweisen, so ist bevorzugt der Adapterrahmen so ausgeformt, dass er stets an den jeweiligen (unterschiedlichen) Anbindungspunkten befestigt werden kann. Ein solcher Adapterrahmen hat den Vorteil, dass das Design der Vorrichtung einfach an verschiedene Typen von dieselelektrischen Lokomotiven angepasst werden kann oder die Vorrichtung ohne Modifikationen für den Umbau mehrerer Typen dieselelektrischer Lokomotiven verwendet werden kann.

Bevorzugt stellt der Adapterrahmen für alle Komponenten der Vorrichtung (des "Electro Power Pack") mechanische Anbindungspunkte nach dem Stand der Technik bereit. Beispielsweise befinden sich Löcher an vorbestimmten Stellen im Adapterrahmen, an denen die Betriebskomponenten verschraubt werden können. Es ist dabei bevorzugt, dass der Adapterrahmen unterschiedlich positionierte Gruppen von Anbindungspunkten an mindestens einer Position für eine Betriebskomponente aufweist, so dass mehrere Typen einer Betriebskomponente (z.B. unterschiedliche Trafotypen) mit dem Adapterrahmen verbunden werden können.

Erfindungsgemäß umfassen die Betriebskomponenten Integralkonstruktionen, nämlich einen Hilfsbetriebeumrichter zusammen mit einem Stromrichter (der Hilfsbetriebeumrichter kann dabei insbesondere im Stromrichter integriert sein), einen Transformator zusammen mit einer Kühlanlage, einen Stromabnehmer zusammen mit einem Transformator und einen Transformator zusammen mit einem Stromrichter. Es liegen also zwei oder mehr der Betriebskomponenten in Form einer funktional zusammenarbeitenden Einheit vor.

Bevorzugt weist der Adapterrahmen Hebe-Befestigungseinheiten auf, die so gestaltet sind, dass Haken eines Krangehänges mit dem Adapterrahmen verbunden werden können. Diese Hebe-Befestigungseinheiten sind bevorzugt Anhebelaschen, Anhebeösen oder entsprechende Ausformungen oder Ausnehmungen im Adapterrahmen. Beispielsweise kann der Adapterrahmen Gewindelöcher aufweisen, in denen Ringösen verschraubt werden können. Die Hebe-Befestigungseinheiten können aber auch angeschweißt sein. Die Hebe-Befestigungseinheiten haben den Vorteil, dass das komplette "Electro Power Pack" komplett in die Lokomotive eingehoben und dort angeschlossen werden kann.

Erfindungsgemäß ist die Vorrichtung so ausgestaltet, dass sie außerhalb der dieselelektrischen Lokomotive als System in Betrieb gesetzt und getestet werden kann.

Bevorzugt umfasst der Adapterrahmen Ballast und/oder Trimmballast. Alternativ oder ergänzend ist der Adapterrahmen so ausgestaltet, dass er als Ballast und/oder Trimmballast fungiert. Da die Ausrüstungen von DE-Loks erfahrungsgemäß schwerer sind als die von E-Loks, ist es von Vorteil, wenn der Adapterrahmen als Ballast und Trimmballast fungiert.

Bevorzugt ist der Adapterrahmen zweiteilig ausgeführt. Dabei sind die einzelnen Teile insbesondere miteinander verbindbar. Dies ist von Vorteil, wenn das Gesamtgewicht des "Electro Power Packs" zu hoch sein sollte (z.B. für einen Kran, den Transport, etc.). Auch für den Fall, dass die Anbindungspunkte der DE-Lok nicht mit den Anbindungspunkten der Komponenten der E-Lok vereinbar sein sollten, kann der Adapterrahmen zweiteilig ausgeführt werden. Wenn jedoch keine Gründe dagegen sprechen, ist der Adapterrahmen besonders bevorzugt stets einteilig ausgestaltet, kann jedoch aus mehreren Bauteilen fest zusammengefügt sein.

Erfindungsgemäß ist die Vorrichtung so ausgestaltet, dass sie zumindest teilweise die äußere Form des Aufbaus einer elektrischen Lokomotive hat, nämlich die Dachkonstruktion und die Seitenwände (insbesondere in der Form "narrow hood", "Schmale Haube"). Dabei bilden die auf den Adapterrahmen aufgesetzten Betriebskomponenten zumindest teilweise vorzugsweise die Außenhaut des Fahrzeuges. Da Umbauten von DE-Loks zu E-Loks erfahrungsgemäß Änderungen im Seitenwand- und Dachbereich mit sich bringen, können Seitenwand- und Dachmodule also ebenfalls in das "Electro Power Pack" integriert werden, was die Umbauzeit weiter reduziert.

Es ist bevorzugt, dass ein Schließsystem (z.B. ein Barrieresystem zum Hochspannungsbereich) in der Vorrichtung integriert ist. Je nach Anwendungsfall kann die Vorrichtung auch einen Gang, z.B. einen zentralen Gang, aufweisen.

Bevorzugt ist ein Verfahren, bei dem zur Herstellung der Vorrichtung Betriebskomponenten einer elektrischen Lokomotive auf einen Adapterrahmen montiert werden und dieser Adapterrahmen zur Verbindung mit den Anbindungspunkten der mechanischen Grundkonstruktion der dieselelektrischen Lokomotive bevorzugt mit Rahmenanbindungen versehen wird.

Bevorzugt ist ein Verfahren, bei dem vor der energietechnischen Verbindung der Vorrichtung mit Antriebskomponenten (z.B. einem Fahrmotor der Lokomotive), insbesondere vor dem Aufbringen der Vorrichtung auf die mechanische Grundkonstruktion, die Vorrichtung auf ihre Funktion getestet wird.

Die Erfindung hat den Vorteil, dass eine Montage der Vorrichtung außerhalb einer Lok stattfinden kann, was viel einfacher ist, als die Betriebskomponenten auf der Lok zu montieren. Zudem kann die Vorrichtung außerhalb einer Lok in Betrieb gesetzt und getestet werden. Die Vorrichtung muss dann nur noch als Einheit auf eine Lokomotive gesetzt und mit wenigen Schnittstellen verbunden werden. Diese Punkte verkürzen die Umbauzeit erheblich.

Außerdem können durch den Aufbau der Betriebskomponenten auf dem Adapterrahmen die mechanischen Aufstellpunkte reduziert werden, sodass die gegebenen Toleranzen des Untergestells der dieselelektrischen Lokomotive besser ausgeglichen werden können. Es müssen im Grunde nur die sowieso vorhandenen Anbindungspunkte verwendet werden, und von diesen noch nicht einmal alle.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen:
- Figur 1: ein Beispiel für ein Untergestell einer dieselelektrischen Lokomotive,
- Figur 2: ein Beispiel für ein Untergestell einer dieselelektrischen Lokomotive mit einem Adapterrahmen,
- Figur 3: ein Beispiel für eine erfindungsgemäße Vorrichtung,
- Figur 4: ein Beispiel für ein Untergestell einer umgebauten dieselelektrischen Lokomotive,
- Figur 5: ein Ausführungsbeispiel für ein erfindungsgemäßes Verfahren,
- Figur 6: ein Beispiel für einen Adapterrahmen.

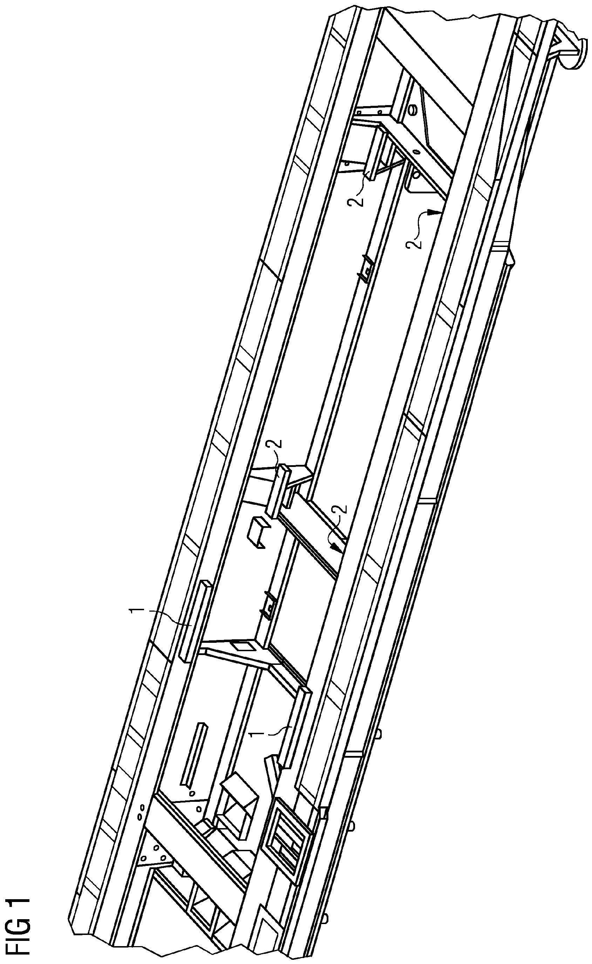

Figur 1 zeigt beispielhaft ein Untergestell einer DE-Lok, die in eine E-Lok umgewandelt werden soll. Dieses Untergestell steht stellvertretend für eine mechanische Grundkonstruktion mit Wagenkasten oder Untergestell mit einem Drehgestell mit den Antrieben (Fahrmotoren und Getriebe). Ebenfalls können ein Führerraum mit Bedienelementen und Komforteinrichtungen und die Bremsausrüstung der dieselelektrischen Lokomotive vorhanden sein.

Das hier dargestellte Untergestell für eine dieselelektrische Lokomotive, umfasst vier Dieselmotoranbindungspunkte 2 (zwei sind perspektivisch verdeckt) und zwei Generatoranbindungspunkte 1. Die Anzahl und die Lage der Anbindungspunkte 1, 2 hängt von der Art der Lokomotive sowie der dort angebrachten dieselelektrischen Antriebseinheiten ab. Andere Dieselmotoren mit Generatoren besitzen z.B. eine andere Anzahl von Anbindungspunkten.

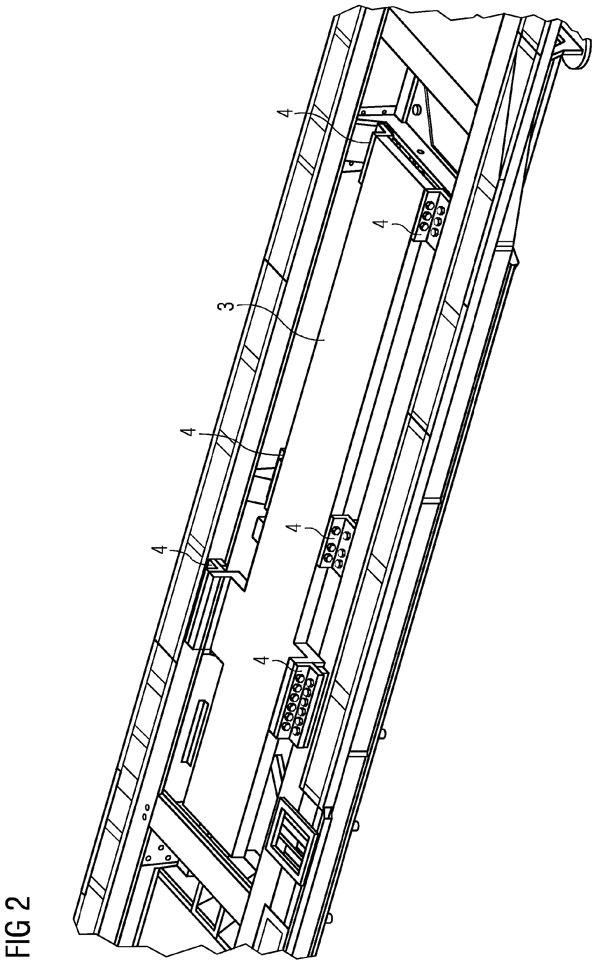

Figur 2 zeigt ein Beispiel für ein Untergestell einer dieselelektrischen Lokomotive mit einem Adapterrahmen 3. Dieser ist an den Generatoranbindungspunkten 1 und den Dieselmotoranbindungspunkten 2 befestigt. In diesem Beispiel wurde der Adapterrahmen 3 an den Generatoranbindungspunkten 1 und Dieselmotoranbindungspunkten 2 mit Rahmenanbindungen 4 mittels einer Verschraubung angebunden. Andere Befestigungsmöglichkeiten, z.B. schweißen oder direktes Anschrauben ohne Rahmenanbindungen 4, können je nach Anwendungsfall gewählt werden.

Diese Figur soll nicht die Erfindung direkt beschreiben, sondern verdeutlicht lediglich das Konzept der festen und sicheren Verbindung des Adapterrahmens 4 mit dem Untergestell. Im Folgenden ist eine erfindungsgemäße Vorrichtung dargestellt, die mittels ihres Adapterrahmens auf die hier gezeigte Weise mit dem Untergestell verbunden werden kann.

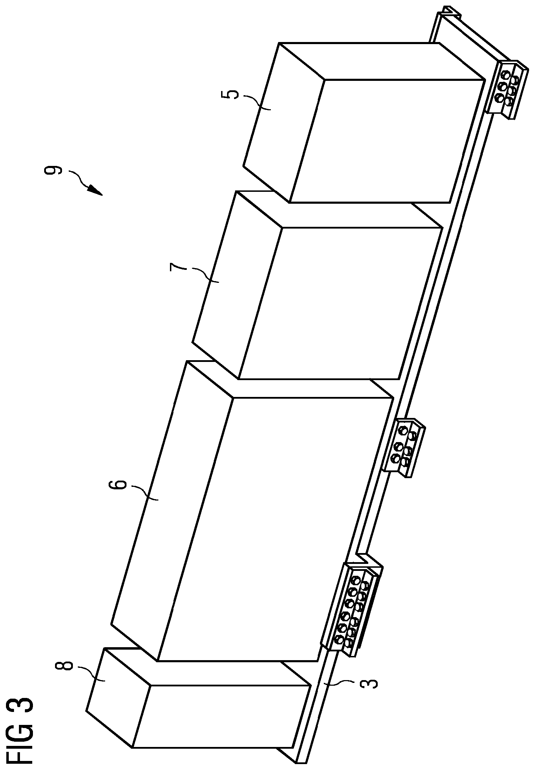

Figur 3 zeigt ein Beispiel für eine erfindungsgemäße Vorrichtung 9. Erfindungsgemäß werden auf dem Adapterrahmen 3 die Betriebskomponenten 5, 6, 7, 8, also die elektrolokomotivenspezifischen Baugruppen, montiert. In dem dargestellten Beispiel sind dies Transformator 5, Stromrichter 6, Kühlanlage 7 und Hilfsbetriebeumrichter 8. Selbstverständlich können andere Konfigurationen der Betriebskomponenten 5, 6, 7, 8, z.B. andere Gruppierungen oder andere Positionierungen vorgenommen werden. Die hier dargestellte montierte Vorrichtung 9 aus Adapterrahmen 3, Transformator 5, Stromrichter 6, Kühlanlage 7 und Hilfsbetriebeumrichter 8 kann auch als "Electro Power Pack" 9 bezeichnet werden.

Der Adapterrahmen 3 ist hier so beschaffen, dass er für alle Komponenten der Vorrichtung 9 mechanische Anbindungspunkte (ggf. nach Stand der Technik) bereitstellt. Zudem sind in der Vorrichtung 9 alle elektrischen, hydraulischen und pneumatischen Verbindungen zwischen den Komponenten Transformator 5, Stromrichter 6, Kühlanlage 7 und Hilfsbetriebeumrichter 8 integriert. Alle Schnittstellen von der Vorrichtung 9 zur restlichen Lokomotive werden an geeigneten Positionen auf der Vorrichtung 9 positioniert. Die Vorrichtung 9 ist somit eine vorprüfbare Einheit, die elektrisch, hydraulisch und pneumatisch vorgeprüft und protokolliert werden kann. Über geeignete Anhebelaschen oder Anhebeösen (nicht dargestellt) kann die komplette Vorrichtung 9 als eine Einheit auf das Untergestell, also in die Lokomotive, eingehoben und dort angeschlossen werden.

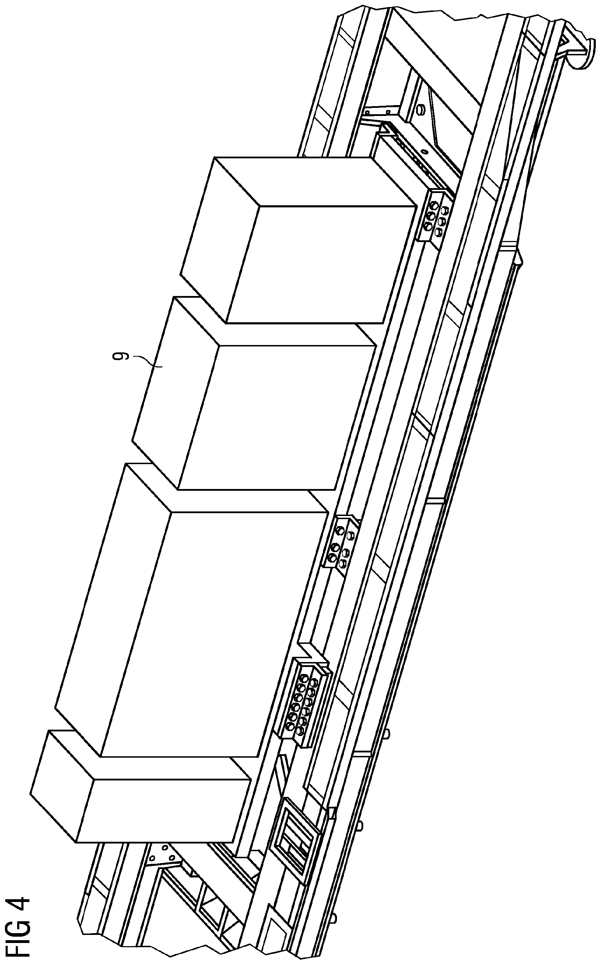

Figur 4 zeigt ein Beispiel für ein Untergestell einer umgebauten dieselelektrischen Lokomotive, mit einer eingesetzten erfindungsgemäßen Vorrichtung nach dem in Figur 3 dargestellten Beispiel.

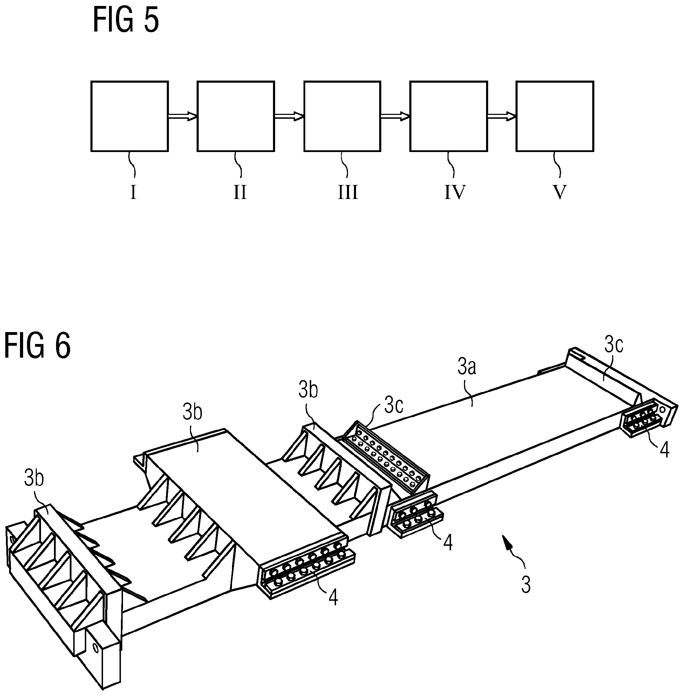

Figur 5 zeigt ein Ausführungsbeispiel für ein erfindungsgemäßes Verfahren zum Umbau einer dieselelektrischen Lokomotive zu einer elektrischen Lokomotive.

In Schritt I erfolgt ein Aufbau bzw. eine Montage einer erfindungsgemäßen Vorrichtung 9, wie sie z.B. in Figur 3 zu sehen ist. Die Montage der Vorrichtung 9 erfolgt dabei außerhalb der dieselelektrischen Lokomotive. Bei der Montage der Vorrichtung 9 werden Betriebskomponenten 5, 6, 7, 8 einer elektrische Lokomotive auf einen Adapterrahmen 3 montiert, z.B. mit diesem verschraubt. Der Adapterrahmen 3 kann zur Verbindung mit Anbindungspunkten 1, 2 einer mechanischen Grundkonstruktion der dieselelektrischen Lokomotive mit Rahmenanbindungen 4 versehen werden.

In Schritt II erfolgt ein Test der Vorrichtung (9) auf ihre Funktion. Dabei können z.B. Sensoren mit den Schnittstellen der Vorrichtung 9 verbunden werden und deren Zustände messen, während die Vorrichtung Steuersignale erhält, wie sie sie auch in der Praxis aus einem Führerstand erhalten würde.

In Schritt III erfolgt ein Aufbringen der Vorrichtung 9 auf eine mechanische Grundkonstruktion der dieselelektrischen Lokomotive. Dazu können Anhebelaschen an dem Adapterrahmen 3 angebracht werden (sofern noch keine Hebe-Befestigungseinheiten vorhanden sind) und dieser mittels eines Krans auf das Grundgerüst der umzubauenden dieselelektrischen Lokomotive gehoben werden.

In Schritt IV wird die Vorrichtung 9 mit Anbindungspunkten 1, 2 der mechanischen Grundkonstruktion verbunden, diese also an den Anbindungspunkten 1, 2 mit der Grundkonstruktion befestigt. Die Befestigung erfolgt vorzugsweise über eine Verschraubung.

In Schritt V erfolgt eine energietechnische Verbindung der Vorrichtung 9 mit Antriebskomponenten der dieselelektrischen Lokomotive.

Figur 6 zeigt einen bevorzugten Adapterrahmen 3. Dieser Adapterrahmen umfasst einen rechteckigen Grundkörper 3a und Haltestrukturen 3b, 3c. Zudem sind Rahmenanbindungen 4 angebracht. Ein Teil der Haltestrukturen 3b, 3c ist als Unterfütterungsstrukturen 3b ausgeformt, um eine erhöhte Anbringung einer Betriebskomponente 5, 6, 7, 8 zu ermöglichen. Ein anderer Teil ist als Befestigungsstrukturen 3b ausgeformt, die eine weitere Betriebskomponente 5, 6, 7, 8 formschlüssig zwischen sich halten sollen.

Es wird abschließend noch einmal darauf hingewiesen, dass es sich bei der vorhergehend detailliert beschriebenen Vorrichtung 9 lediglich um Ausführungsbeispiele handelt, welche vom Fachmann in verschiedenster Weise modifiziert werden können, ohne den durch die Ansprüche definierten Bereich der Erfindung zu verlassen. Weiterhin schließt die Verwendung der unbestimmten Artikel "ein" bzw. "eine" nicht aus, dass die betreffenden Merkmale auch mehrfach vorhanden sein können. Ebenso schließen die Begriffe "Einheit" und "Komponente" nicht aus, dass die betreffenden Elemente aus mehreren zusammenwirkenden Teil-Segmenten bestehen, die gegebenenfalls auch räumlich verteilt sein können.

## Patentansprüche

1. Vorrichtung (9) zum Umbau einer dieselelektrischen Lokomotive zu einer elektrischen Lokomotive umfassend Betriebskomponenten (5, 6, 7, 8) für eine elektrische Lokomotive und einen Adapterrahmen (3), auf dem die Betriebskomponenten (5, 6, 7, 8) aufgebracht sind,
- bei der der Adapterrahmen (3) so gestaltet ist, dass er mit Anbindungspunkten (1, 2) einer mechanischen Grundkonstruktion der dieselelektrischen Lokomotive verbindbar ist,
- bei der die Betriebskomponenten (5, 6, 7, 8) Integralkonstruktionen umfassen, nämlich einen Hilfsbetriebeumrichter (8) zusammen mit einem Stromrichter (6), einen Transformator (5) zusammen mit einer Kühlanlage (7), einen Stromabnehmer zusammen mit einem Transformator (5) und einen Transformator (5) zusammen mit einem Stromrichter (6), **dadurch gekennzeichnet, dass**
- die Betriebskomponenten (5, 6, 7, 8) auf dem Adapterrahmen (3) miteinander funktional verbunden sind, wobei die Vorrichtung (9) elektrische, hydraulische und pneumatische Verbindungen zwischen dem Transformator (5), Stromrichter (6), Kühlanlage (7) und dem Hilfsbetriebeumrichter (8) umfasst,
- die Vorrichtung (9) so ausgestaltet ist, dass sie außerhalb der dieselelektrischen Lokomotive als System in Betrieb gesetzt und getestet werden kann,
- die Vorrichtung (9) so ausgestaltet ist, dass sie zumindest teilweise die äußere Form des Aufbaus einer elektrischen Lokomotive hat, nämlich die Dachkonstruktion und die Seitenwände, wobei die auf den Adapterrahmen (3) aufgesetzten Betriebskomponenten (5,
- 6, 7, 8) zumindest teilweise die Außenhaut des Fahrzeuges bilden.

2. Vorrichtung nach Anspruch 1,
- bei der die auf dem Adapterrahmen (3) angeordneten Betriebskomponenten (5, 6, 7, 8) so ausgestaltet sind, dass sie mindestens einen Fahrmotor der dieselelektrischen Lokomotive antreiben können, wenn sie mit einer Energiequelle ausgestattet oder verbunden werden,
- bei der die Betriebskomponenten (5, 6, 7, 8) elektrische Schaltanlagen, Steueranlagen und Übertragungsanlagen umfassen, nämlich Komponenten der Gruppe Transformator (5), Stromrichter (6), Kühlanlage (7) und Hilfsbetriebeumrichter (8), Bremsdruckerzeuger, Stromabnehmer und Ladungsspeicher.

3. Vorrichtung nach einem der vorangehenden Ansprüche, umfassend Rahmenanbindungen am Adapterrahmen (3) zur Verbindung mit Anbindungspunkten (1, 2) der mechanischen Grundkonstruktion einer dieselelektrischen Lokomotive.

4. Vorrichtung nach einem der vorangehenden Ansprüche, bei der der Adapterrahmen (3) so gestaltet ist, dass er auf die mechanische Grundkonstruktion mehrerer Typen von dieselelektrischen Lokomotiven aufbringbar ist und ebenfalls so gestaltet ist, dass er mit Anbindungspunkten (1, 2) dieser Typen von dieselelektrischen Lokomotiven verbindbar ist.

5. Vorrichtung nach einem der vorangehenden Ansprüche, bei der der Adapterrahmen (3) Hebe-Befestigungseinheiten aufweist, bevorzugt Anhebelaschen oder Anhebeösen, die so gestaltet sind, dass Haken eines Krangehänges mit dem Adapterrahmen (3) verbunden werden können.

6. Vorrichtung nach einem der vorangehenden Ansprüche, bei der der Adapterrahmen Ballast und/oder Trimmballast umfasst oder so ausgestaltet ist, dass er als Ballast und/oder Trimmballast fungiert.

7. Vorrichtung nach einem der vorangehenden Ansprüche, bei der der Adapterrahmen zweiteilig ausgeführt ist, wobei die beiden Teile miteinander verbindbar sind.

8. Elektrische Lokomotive umfassend eine Vorrichtung (9) nach einem der vorangehenden Ansprüche.

9. Verfahren zum Umbau einer dieselelektrischen Lokomotive zu einer elektrischen Lokomotive umfassend die folgenden Schritte:
- Bereitstellung einer Vorrichtung (9) nach einem der Ansprüche 1 bis 7 außerhalb der dieselelektrischen Lokomotive,
- Testen der Vorrichtung auf ihre Funktion und nachfolgendes Aufbringen der Vorrichtung (9) auf eine mechanische Grundkonstruktion der dieselelektrischen Lokomotive,
- Verbinden der Vorrichtung (9) mit Anbindungspunkten (1, 2) der mechanischen Grundkonstruktion,
- energietechnische Verbindung der Vorrichtung (9) mit Antriebskomponenten der dieselelektrischen Lokomotive.

10. Verfahren nach Anspruch 9, wobei zur Herstellung der Vorrichtung (9) Betriebskomponenten (5, 6, 7, 8) einer elektrische Lokomotive auf einen Adapterrahmen (3) montiert werden und dieser Adapterrahmen (3) zur Verbindung mit den Anbindungspunkten (1, 2) der mechanischen Grundkonstruktion der dieselelektrischen Lokomotive bevorzugt mit Rahmenanbindungen (4) versehen wird.

## Claims

1. Device (9) for converting a diesel-electric locomotive into an electric locomotive comprising operational components (5, 6, 7, 8) for an electric locomotive and an adapter frame (3), on which the operational components (5, 6, 7, 8) are mounted,
- in which the adapter frame (3) is designed such that it can be connected to connection points (1, 2) of a basic mechanical structure of the diesel-electric locomotive,
- in which the operational components (5, 6, 7, 8) comprise integral structures, to be specific an auxiliary power converter (8) together with a static power converter (6), a transformer (5) together with a cooling system (7), a current collector together with a transformer (5) and a transformer (5) together with a static power converter (6), **characterized in that**
- the operational components (5, 6, 7, 8) are functionally connected to one another on the adapter frame (3), wherein the device (9) comprises electrical, hydraulic and pneumatic connections between the transformer (5), static power converter (6), cooling system (7) and the auxiliary power converter (8),
- the device (9) is designed such that it can be put into operation and tested as a system outside the diesel-electric locomotive,
- the device (9) is designed such that it at least partially has the outer form of the construction of an electric locomotive, to be specific the roof structure and the side walls, wherein the operational components (5, 6, 7, 8) placed onto the adapter frame (3) form at least partially the outer skin of the vehicle.

2. Device according to Claim 1,
- in which the operational components (5, 6, 7, 8) arranged on the adapter frame (3) are designed such that they can drive at least one traction motor of the diesel-electric locomotive if they are equipped with or connected to an energy source,
- in which the operational components (5, 6, 7, 8) comprise electrical switching systems, controlling systems and transmitting systems, to be specific components of the group comprising the transformer (5), static power converter (6), cooling system (7) and auxiliary power converter (8), brake pressure generator, current collector and charge storage unit.

3. Device according to either of the preceding claims, comprising frame connections on the adapter frame (3) for connecting the adapter frame (3) to connection points (1, 2) of the basic mechanical structure of a diesel-electrical locomotive.

4. Device according to one of the preceding claims, in which the adapter frame (3) is designed such that it can be mounted on the basic mechanical structure of a number of types of diesel-electric locomotives and is likewise designed such that it can be connected to connection points (1, 2) of these types of diesel-electric locomotives.

5. Device according to one of the preceding claims, in which the adapter frame (3) has lifting fastening units, preferably lifting lugs or lifting eyes, which are designed such that hooks of a crane suspension can be connected to the adapter frame (3).

6. Device according to one of the preceding claims, in which the adapter frame comprises ballast and/or trimming ballast or is designed such that it acts as ballast and/or trimming ballast.

7. Device according to one of the preceding claims, wherein the adapter frame is of a two-part configuration, wherein the two parts can be connected to one another.

8. Electric locomotive comprising a device (9) according to one of the preceding claims.

9. Method for converting a diesel-electric locomotive into an electric locomotive comprising the following steps:
- providing a device (9) according to one of Claims 1 to 7 outside the diesel-electric locomotive,
- testing the device for its function and subsequently mounting the device (9) on a basic mechanical structure of the diesel-electric locomotive,
- connecting the device (9) to connection points (1, 2) of the basic mechanical structure,
- energy-related connection of the device (9) to drive components of the diesel-electric locomotive.

10. Method according to Claim 9, wherein, to produce the device (9), operational components (5, 6, 7, 8) of an electric locomotive are assembled on an adapter frame (3) and this adapter frame (3) is preferably provided with frame connections (4) for connecting to the connection points (1, 2) of the basic mechanical structure of the diesel-electric locomotive.

## Revendications

1. Dispositif (9) pour la conversion d'une locomotive diesel-électrique en une locomotive électrique comprenant des composants d'exploitation (5, 6, 7, 8) pour une locomotive électrique et un cadre adaptateur (3) sur lequel sont agencés les composants d'exploitation (5, 6, 7, 8),
- dans lequel le cadre adaptateur (3) est configuré de sorte qu'il peut être relié à des points de liaison (1, 2) d'une construction mécanique de base de la locomotive diesel-électrique,
- dans lequel les composants d'exploitation (5, 6, 7, 8) comprennent des constructions intégrales, à savoir un convertisseur auxiliaire (8) conjointement avec un convertisseur de courant(6), un transformateur (5) conjointement avec une installation réfrigérante (7), un capteur de courant conjointement avec un transformateur (5) et un transformateur (5) conjointement avec un convertisseur de courant (6), **caractérisé en ce que**
- les composants d'exploitation (5, 6, 7, 8) sur le cadre adaptateur (3) sont reliés ensemble de façon fonctionnelle, dans lequel le dispositif (9) comprend des liaisons électriques, hydrauliques et pneumatiques entre le transformateur (5), le convertisseur de courant (6), l'installation réfrigérante (7) et le convertisseur auxiliaire (8),
- le dispositif (9) est configuré de sorte qu'il puisse être mis en service et testé en tant que système à l'extérieur de la locomotive diesel-électrique,
- le dispositif (9) est configuré de sorte qu'il a au moins partiellement la forme extérieure de la structure d'une locomotive électrique, à savoir la construction du toit et les parois latérales, dans lequel les composants d'exploitation (5, 6, 7, 8) montés sur le cadre adaptateur (3) forment au moins partiellement l'enveloppe extérieure du véhicule.

2. Dispositif selon la revendication 1,
- dans lequel les composants d'exploitation (5, 6, 7, 8) disposés sur le cadre adaptateur (3) sont configurés de sorte qu'ils peuvent actionner au moins un moteur de traction de la locomotive diesel-électrique, lorsqu'ils sont équipés d'une source d'énergie ou y sont reliés,
- dans lequel les composants d'exploitation (5, 6, 7, 8) comprennent des installations de commutation, des installations de commande et des installations de transmission, à savoir des composants du groupe transformateur (5), convertisseur de courant (6), installation réfrigérante (7) et convertisseur auxiliaire (8), générateur de pression de frein, capteur de courant et accumulateur de charges.

3. Dispositif selon l'une des revendications précédentes, comprenant des liaisons au cadre sur le cadre adaptateur (3) pour le raccordement avec des points de liaison (1, 2) de la construction mécanique de base d'une locomotive diesel-électrique.

4. Dispositif selon l'une des revendications précédentes, dans lequel le cadre adaptateur (3) est configuré de sorte qu'il peut être agencé sur la construction mécanique de base de plusieurs types de locomotives diesel-électriques et est également configuré de sorte qu'il peut être relié à des points de liaison (1, 2) de ces types de locomotives diesel-électriques.

5. Dispositif selon l'une des revendications précédentes, dans lequel le cadre adaptateur (3) présente des unités de fixation et levage, de préférence des languettes de levage ou des œillets de levage, qui sont configurées de sorte que des crochets d'une élingue de grue peuvent être reliés au cadre adaptateur (3).

6. Dispositif selon l'une des revendications précédentes, dans lequel le cadre adaptateur comprend du ballast et / ou du ballast d'équilibrage ou est configuré de sorte qu'il fait office de ballast et / ou de ballast d'équilibrage.

7. Dispositif selon l'une des revendications précédentes, dans lequel le cadre adaptateur est réalisé en deux parties, dans lequel les deux parties peuvent être reliées ensemble.

8. Locomotive électrique comprenant un dispositif (9) selon l'une des revendications précédentes.

9. Procédé pour la conversion d'une locomotive diesel-électrique en une locomotive électrique comprenant les étapes suivantes :
- mise à disposition d'un dispositif (9) selon l'une des revendications 1 à 7 à l'extérieur de la locomotive diesel-électrique,
- test du dispositif quant à son fonctionnement et agencement consécutif du dispositif (9) sur une construction mécanique de base de la locomotive diesel-électrique,
- liaison du dispositif (9) avec des points de liaison (1, 2) de la construction mécanique de base,
- liaison énergétique du dispositif (9) avec des composants d'exploitation de la locomotive diesel-électrique.

10. Procédé selon la revendication 9, dans lequel pour fabriquer le dispositif (9), des composants d'exploitation (5, 6, 7, 8) d'une locomotive électrique sont montés sur un cadre adaptateur (3) et ce cadre adaptateur (3), pour la liaison avec les points de liaison (1, 2) de la construction mécanique de base de la locomotive diesel-électrique est doté, de préférence, de liaisons au cadre (4).
